# EUROPEAN PATENT SPECIFICATION

(11) **EP 2 065 298 B1**
(45) Date of publication and mention of the grant of the patent: **28.09.2011**
(21) Application number: 07023176.6
(22) Date of filing: 29.11.2007
(51) Int. Cl.: B62M 25/04

(54) **Bicycle control device**
Steuerungseinrichtung für ein Fahrrad
Dispositif de commande d'une bicyclette

(43) Date of publication of application: 03.06.2009
(73) Proprietor: SHIMANO INC., Osaka 590-8577 (JP)
(72) Inventor: Watarai, Etsuyoshi, Sakai City Osaka 590-8577 (JP)
(74) Representative: Harrison, Robert John

(56) References cited:
- EP-A- 1 535 829
- EP-A- 1 739 001
- WO-A-2007/083331
- FR-A- 2 861 686
- US-A- 5 848 555

## Description

### FIELD OF THE INVENTION

This invention generally relates to a bicycle control device for operating a bicycle component. More specifically, the present invention relates to a bicycle control (component actuating) device that has an operating member movable in both a shift operating plane and a non-shift operating plane.

### BACKGROUND INFORMATION

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle, especially the bicycle control devices for performing shifting and braking operations.

Typically, bicycle shifters mechanically operate derailleurs via cables, while bicycle brake levers mechanically operate brake devices via cables. In either case, an operating force is typically applied by one of the rider's fingers to operate a control lever, which in turn transmitted the operating force to the drive component of a bicycle shifting mechanism by a cable that was fixed at one end to the control lever. Currently, many different types of control devices exist for performing shifting and braking operations.

One example of such control devices is disclosed in U.S. Patent Application Publication No. 2006/0207375. In this publication, a brake control device integrated with a shift control device is disclosed. More specifically, a shift control unit is disposed inside a bracket member (base member) of the brake control device and a shift operating lever is disposed behind a brake operating lever. When the shift operating lever is pivoted in a lateral direction (toward center line of a bicycle) by a first stroke, a shift wire releasing operation is performed, while when the shift operating lever is pivoted in the same direction by a second stroke which is greater than the first stroke, a shift wire pulling operation is performed. While this type of control devices can perform both wire releasing and pulling operations with a single shift operating lever, it is still confusing for some riders because two operating levers (brake operating lever and shift operating lever) are located at a very close location. Document EP 1 739 001 discloses a bicycle control device according to the preamble of claim 1.

In view of the above, it will be apparent to those skilled in the art from this disclosure that there exists a need for an improved bicycle control device. This invention addresses this need in the art as well as other needs, which will become apparent to those skilled in the art from this disclosure.

### SUMMARY OF THE INVENTION

One object of the present invention is to provide a control device that has a single shift and brake operating member movable in both a shift operating plane and a non-shift operating plane (brake operating plane).

The foregoing objects can basically be attained by providing a bicycle control device that basically comprises a base member; a shift control unit movable in a first direction and a second direction; an operating member operatively coupled to the shift control unit, the operating member being movably coupled relative to the base member to move along a shift operating path from a rest position to a first shift position for causing a movement of the shift control unit in the first direction, and move along the shift operating path from the rest position to a second shift position for causing a movement of the shift control unit in the second direction, wherein the first shift position is located between the rest position and the second shift position, wherein the operating member is further movably coupled relative to the base member to move along a brake operating path for performing a braking operation, the brake operating path being non-coincident with the shift operating path, and wherein the operating member has a finger contact portion configured and arranged for operating it along said brake operating path.

Hence one single operating member can be used for both shifting and braking operation. It should be noted that the invention allows for configurations using no, one or several intermediate elements, as long as only one operating member is provided for.

Preferably the device further comprises a control member including a first portion operatively coupled to the shift control unit and a second portion engaged with the operating member, in particular the second portion of the control member being biased toward the operating member. Such biasing could be provided for using a spring. Thus the one or more control member(s) are operated by the operating member in order to obtain the requested operation, i.e. braking or shifting. Still it is to be noted that direct actuation by the operating member is possible as well as regrouping all functions in one single control member, being in turn moved or operated by the one single operating member.

Preferably the operating member and/or the control member include(s) a mounting part pivotally coupled to the base member and an operating part pivotally coupled to the mounting part.

In a preferred embodiment the operating member has a concave portion opposite to the finger contact portion, in particular the concave portion is configured for slidably receiving the control member.

Preferably the operating member and the control member are arranged to be pivotable about a common axis along the shift operating path, in particular an operational axis of the shift control unit.

In an alternative embodiment the operating member and the control member are arranged to be pivotable about parallel and/or offset axes along the shift operating path.

In a preferable embodiment the operating member and the control member are arranged to be pivotable about parallel and/or offset axes along said brake operating path. This allows for perfect adaptation in an ergonomic point of view.

These and other objects, features, aspects and advantages of the present invention will become apparent to those skilled in the art from the following detailed description, which, taken in conjunction with the annexed drawings, discloses a preferred embodiment of the present invention. In particular embodiments the operating member and the control member could be arranged to be offset in a lateral direction for greater ease of operation. The control member can be provided with at least one lateral projection in order to reduce friction forces during relative sliding between the operating member and the control member. Finally it is possible to consider as an option that the finger contact portion and/or said shift operating part is/are substantially perpendicular to said braking path.

### BRIEF DESCRIPTION OF THE DRAWINGS

Referring now to the attached drawings which form a part of this original disclosure:

Figure 1 is a side elevational view of bicycle equipped with a pair of bicycle control devices (only one shown) coupled to a drop type handlebar in accordance with a preferred embodiment of the present invention;

Figure 2 is an enlarged partial perspective view of the drop type handlebar with the pair of bicycle control devices in accordance with the illustrated embodiment of the present invention;

Figure 3 is an inside elevational view of the right hand side bicycle control devide with the operating lever in the rest position and a portion of the operating lever broken away to illustrate the sliding connection between the operating lever and the control lever, with a partial cross-sectional view of a known shifting control unit;

Figure 4 is a rear end elevational view of the operating lever of the right hand side bicycle control device corresponding to Figures 3 with the operating lever in the rest position;

Figure 5 is an inside elevational view of the right hand side bicycle control device with the operating lever moved to a first shifting position;

Figure 6 is an inside elevational view of the right hand side bicycle control device with the operating lever moved to a braking position;

### DETAILED DESCRIPTION OF THE PREFERRED EMBODIMENTS

Selected embodiment of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

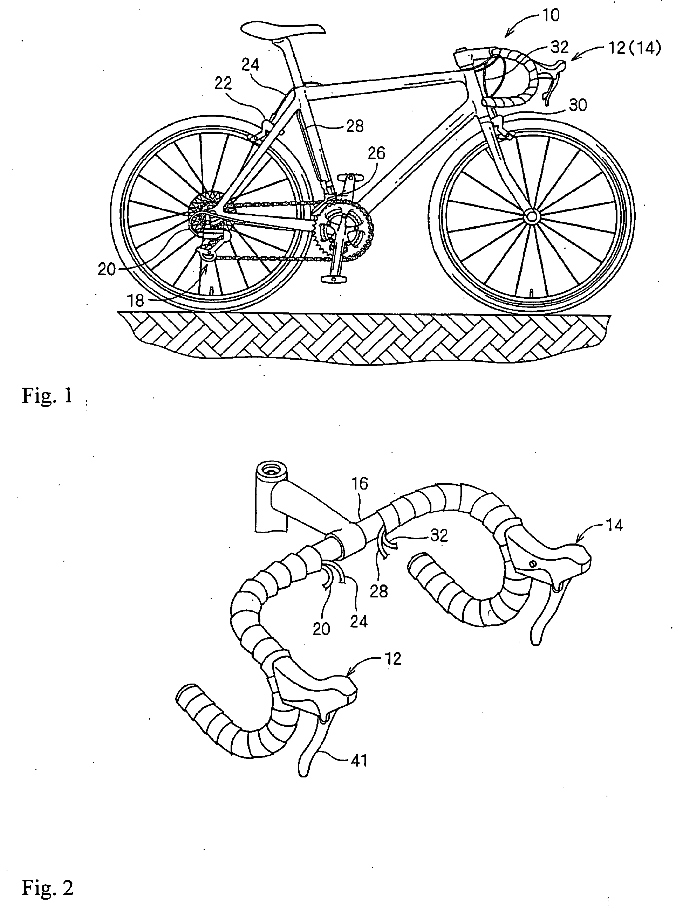

Referring initially to Figures 1 and 2, a bicycle 10 is illustrated in accordance with a pair of bicycle control devices 12 and 14 mounted on a bicycle handlebar 16 in accordance with one embodiment of the present invention. The bicycle control device 12 is a right hand side control device operated by the rider's right hand, while the bicycle control device 14 is a left hand side control device operated by the rider's left hand. In the illustrated embodiment, the bicycle control device 12 is operatively coupled to a rear derailleur 18 via a shift control cable 20 and a rear brake device 22 via a brake control cable 24. The bicycle control device 14 is operatively coupled to a front derailleur 26 via a shift control cable 28 and a front brake device 30 via a brake control cable 32. Alternatively, the bicycle control devices 12 and 14 can be switched so that the rider can operate the rear derailleur 18 and the front derailleur 26 with opposite hands and/or operate the rear and front brake devices 22 and 30 with opposite hands. In the illustrated embodiment, the left hand side bicycle control device 14 is substantially identical to the right hand side bicycle control device 12, except for the shifting unit has been modified to reduce the number of gears that can be shifted. In any event, the left hand side bicycle control device 14 is essentially identical in construction and operation to the right hand side bicycle control device 12, except that the left hand side bicycle control device 14 is a mirror image of the right hand side bicycle control device 12 and the number of shift positions for the left hand side bicycle control devices 12 and 14 are different. Thus, only the right hand side bicycle control device 12 will be discussed and illustrated herein. Preferably, the cables 20, 24, 28 and 32 are conventional bicycle control cables that have an outer casing the covers an inner wire.

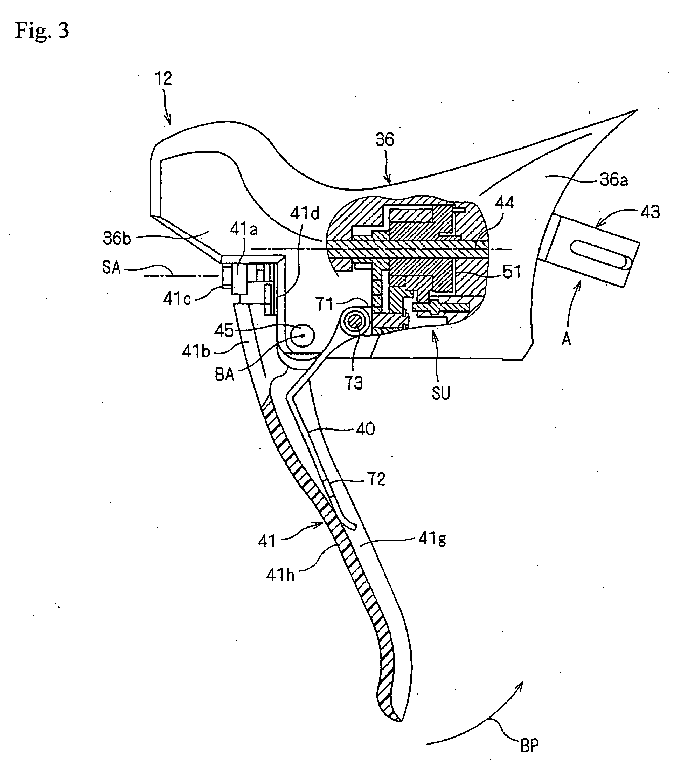

Referring now to Figures 3 to 6, the bicycle control device 12 basically includes a base member (bracket member) 36, a shift control unit SU, a control member 40 and an operating member or lever 41. The shift control unit SU is substantially same as a shift control unit disclosed in the U.S. Patent Application Publication No. 2006/0207375. Therefore, the shift control unit SU is not discussed in detail. The shift control unit SU is pivotally mounted to the base member 36 about an axle 44 defining an operational axis of the shift control unit SU. The shift control unit SU is movable in a first direction and a second direction opposite to the first direction. The shift control unit SU is a cable operating device that includes a wire takeup member 51. The wire takeup member 51 is attached to an inner wire of the shift control cable 20 to selectively pull and release the inner wire of the shift control cable 20 in response to operation of the operating lever 41. As explained in the U.S. Patent Application Publication No. 2006/0207375, the control member 40 has a first portion 71 and a second portion 72. The first portion 71 is rotatably mounted to the axle 44 for selectively causing movement of the wire takeup member 51 of the shift control unit SU in the first direction (i.e. a wire releasing direction) and the second direction (i.e. a wire pulling direction). Thus, when the control member 40 is pivoted about the axle 44 in a lateral direction (toward center line of a bicycle) by a first stroke, a wire releasing operation is performed, while when the control member 40 is pivoted in the same direction by a second stroke greater than the first stroke, a wire pulling operation is performed.

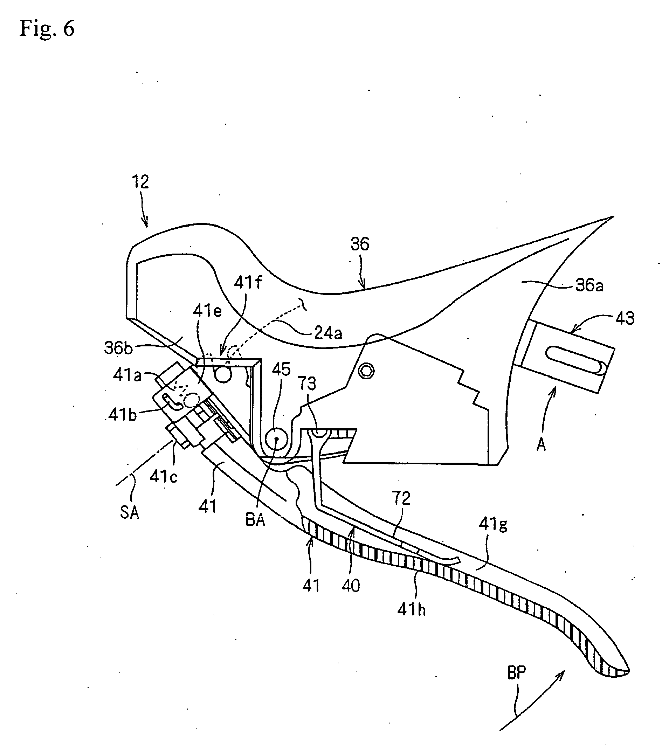

The operating lever 41 is a dual function operating lever that performs a braking operation in addition to a shifting operation. Thus, the bicycle control device 12 is configured and arranged to perform both a braking operation and a shifting operation as a single integrated unit that is mounted to the handlebar 16. In the illustrated embodiment, the operating lever 41 is configured and arranged to perform a wire pulling operation, a wire releasing operation and a braking operation. For the brake operation the brake cable can be fixed to the operating lever as shown in Fig.6 at reference sign 41f. In an alternative embodiment that is not illustrated in the drawings the brake cable could also be fixed to the operating member.

The base member 36 includes a main body having a first end section 36a with a handlebar mounting structure 43 and a second end section 36b remotely disposed from the first end section 36a. The operating lever 41 is located at the second end section 36b of the main body. The base member 36 is fixedly mounted to the handlebar 16 by the handlebar mounting structure 43, which defines a handlebar receiving area A. The handlebar mounting structure 43 is preferably a conventional band clamp or similar structure.

In the illustrated embodiment, the operating lever 41 is operatively coupled to the shift control unit SU via the control member 40 to operate the shift control unit SU (mainly, the wire takeup member 51) in the wire pulling direction and in the wire releasing direction about the axle 44 of the shift control unit SU.

The operating lever 41 includes a mounting part 41 a and an operating part 41 b with the operating part 41 b pivotally mounted to the mounting part 41a by a pivot pin 41 c about a shift axis SA. The mounting part 41a of the operating lever 41 is also movably coupled relative to the base member 36 by a pivot pin 45 about a brake pivot axis BA for performing the braking operation. Thus, the operating part 41b of the operating lever 41 is movably coupled to mounting part 41a (i.e., relative to the base member 36) to move along a shift operating plane or path P1 and movably coupled relative to the base member 36 to move along a non-shift (brake) operating plane or path BP that is non-coincident with the shift operating plane or path P1. The operating part 41b includes a finger contact portion 41h for operating (moving) the operating lever 41 along the non-shift (brake) operating plane or path BP. The mounting part 41a includes a brake cable receiving structure 41f for receiving an inner wire 24a of the brake cable 24. The operating part 41b is biased about the pivot pin 41c to a rest position RP with respect to the shift operating plane or path P 1 by a biasing element 41 d. Ball and recess type positioning mechanism 41e is attached to the mounting part 41 a to maintain the operating part 41b of the operating lever 41 in the rest position RP. The operating lever 41 is operatively coupled to the shift control unit SU via the control member 40 to operate the wire takeup member 51 of the shift control unit SU as explained below. The operating lever 41 is slidably engaged with the control member 40 such that the control member 40 is moved when the operating lever 41 is moved along the non-shift (brake) operating path BP with sliding contact therebetween.

Thus, the operating lever 41 is coupled relative to the base member 36 to move along the shift operating plane P1 that intersect with the non-shift (brake) operating plane or path BP (movement plane) of the operating lever 41. The non-shift (brake) operating plane or path BP (movement plane) of the operating lever 41 is perpendicularly oriented with respect to the shift operating plane or path P1 in the preferred embodiment. But any configuration apart from perpendicular orientation is possible.

The movement of the operating lever 41 will now be generally discussed with respect to the base member 36 that is configured to be fixedly mounted to the handlebar 16 by the handlebar mounting structure 43.

In this illustrated embodiment, the control member 40 contacts the rearward facing side of the operating lever 41. The operating lever 41 is configured and arranged to pivot in a first rotational direction about the shift axis SA with respect to the base member 36 from the rest position RP, with the first rotational direction being a direction toward a central longitudinal plane of the bicycle.

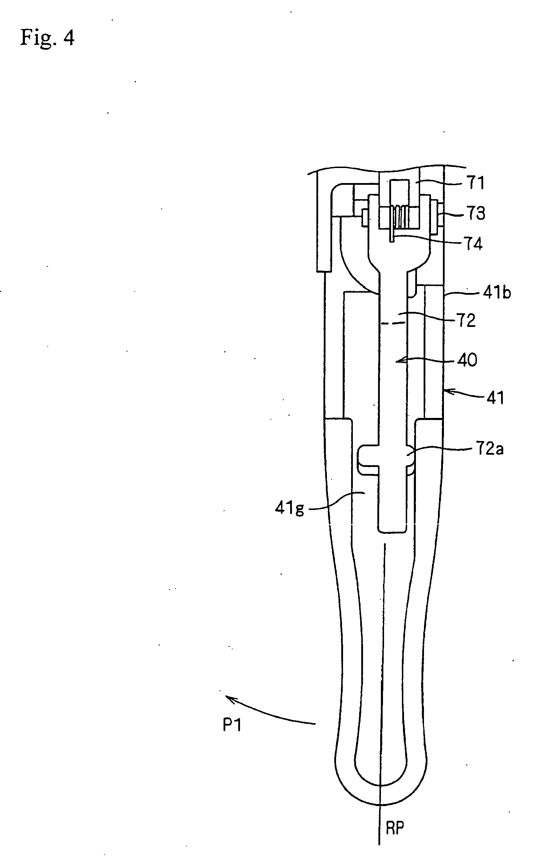

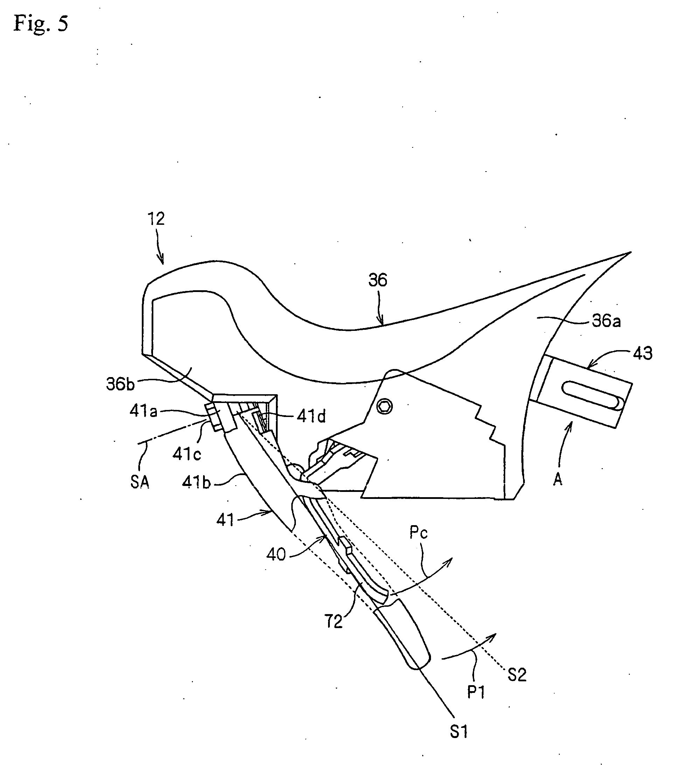

When a wire releasing operation is desired, the rider pushes the operating lever 41 in the first rotational direction transverse to a center plane of the base member 36 along the shift operating plane or path P1 from the rest position RP (Figures 3 and 4) to a first shift position S1 (Figures 5) to operate the shift control unit SU. This movement of the operating lever 41 causes a movement of the shift control unit SU in the first direction, more specifically the operating lever 41 operates the wire takeup member 51 of shift control unit SU via the control member 40 in the wire releasing direction.

When a wire pulling operation is desired, the rider pushes the operating lever 41 further from the first shift position shown in Figure 5 without releasing the operating lever 41. In other words, when the operating lever 41 is moved beyond the first shift position S1 to a second shift position S2 (see Figure 5) in the first rotational direction along the shift operating plane or path P1, the wire pulling operation starts. Since detailed explanation of the operation of the shift control unit SU is provided in the U.S. Patent Application Publication No. 2006/0207375, further explanation is omitted. This movement of the operating lever 41 beyond the first shift position S1 causes a movement of the shift control unit SU in the second direction, more specifically the operating lever 41 operates the wire takeup member 51 of shift control unit SU in the wire pulling operating direction.

As seen in Figures 6, in the illustrated embodiment, the operating lever 41 pivots about the pivot pin 45 between the rest position (Figures 3 and 4) and a braking position (Figures 6) along the non-shift (brake) operating plane or path BP. The movement of the operating lever 41 from the rest position to the braking position results in the second portion 72 of the control member 40 also being pivoted along the non-shift (brake) operating plane BP about a hinge 73.

The control member 40 is pivotally mounted to the axle 44 to move along an operating plane Pc. The operating plane Pc intersects with the non-shift (brake) operating plane or path BP (movement plane) of the operating lever 41 and being parallel with the shift operating plane P 1 in this embodiment. But non-parallel configuration is also possible.

In particular, the control member 40 basically includes the first portion 71 operatively coupled to the shift control unit SU and the second portion 72 spaced from the first portion 71. The first portion 71 of the control member 40 is pivotally connected to the shift control unit SU about the axle 44 to operate the shift control unit SU when the operating lever 41 is operated along the shift operating plane or path P1. The second portion 72 is spaced from the first portion 71 and contacts the rear surface of the operating lever 41. Thus, the operating lever 41 is slidably engaged with the second portion 72 of the control member 40 such that the second portion 72 of the control member 40 is moved when the operating lever 40 is moved along the non-shift operating path BP with sliding contact therebetween (Figure 6) and when the operating lever 40 is moved along the shift operating path P1 with sliding contact therebetween (Figure 5). The second portion 72 of the control member 40 includes a projection 72a for reducing a frictional force during sliding movement.

The hinge pin 73 pivotally interconnects the first and second portions 71 and 72 together. A biasing element 74 is mounted on the hinge pin 73 to urge the second portion 72 forwardly with respect to the first portion 71 to a rest position. This intermediate hinge 73 between the first and second portions 71 and 72 allows the second portion 72 to pivot rearwardly with respect to the first portion 71 such as when the operating lever 41 is operated from the rest (non-braking) position to the braking position as seen in Figures 6

In the above discussed embodiment, the shift control unit SU is illustrated as a cable operating shift control unit, which is merely one example of a shift control unit that can be used with the bicycle control device 12. In other words, the shift control unit for the bicycle control device 12 is not limited to a cable operating system, but rather other types of shift control units can be used with the bicycle control device 12 described and illustrated herein. For example, the shift control unit SU can be replaced by an electrical shift control unit, or a pneumatic shift control unit, or hydraulic shift control unit. In the case of an electrical shift control unit, at least a pair of electrical switches would be provided for performing upshift and downshift operations.

In the above discussed embodiment, the operating lever 41 and the control member 40 are arranged to be pivotable about different but parallel axes axis along the shift operating path. However, it is possible to arrange so that the operating lever 41 and the control member 40 pivots about a common axis, in particular the operational axis of the shift control unit SU.

Furthermore in the above discussed embodiment, the operating lever 41 and the control member 40 are arranged to be pivotable about different but parallel axes axis along the brake operating path for ease of operation of the control member both when braking and when not. However, it is possible to arrange so that the operating lever 41 and the control member 40 pivots about a common axis.

### GENERAL INTERPRETATION OF TERMS

In understanding the scope of the present invention, the term "configured" as used herein to describe a component, section or part of a device includes hardware and/or software that is constructed and/or programmed to carry out the desired function. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention as used in the normal riding position. Finally, terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

## Claims

1. A bicycle control device (12) comprising:
a base member (36);
a shift control unit (SU) movable in a first direction and a second direction;
an operating member (41) operatively coupled to the shift control unit, the operating member (41) being movably coupled relative to the base member (36) to move along a shift operating path (SP) from a rest position (RP) to a first shift position for causing a movement of the shift control unit in the first direction,
the operating member (41) being further movably coupled relative to the base member to move along a brake operating path (BP) for performing a braking operation, the brake operating path being non-coincident with the shift operating path, and the operating member (41) having a finger contact portion (41b) configured and arranged for operating the operating member along said brake operating path,
**characterized in that**
the operating member (41) is movably coupled relative to the base member (36) to move along the shift operating path from the rest position to a second shift position for causing a movement of the shift control unit in the second direction, wherein the first shift position is located between the rest position and the second shift position.

2. A bicycle control device according to claim 1, further comprising a control member (40) including a first portion (71) operatively coupled to the shift control unit (SU) and a second portion (72) engaged with the operating member (41), in particular the second portion (72) of the control member being biased toward the operating member.

3. A bicycle control device according to any one of the preceding claims, wherein the operating member (41) include a mounting part (41a) pivotally coupled to the base member and an operating part (4 1 b) pivotally coupled to the mounting part.

4. A bicycle control device according to any one of claims 2 and 3, wherein the operating member (41) has a concave portion opposite to the finger contact portion.

5. A bicycle control device according to claim 4, wherein the concave portion is configure for slidably receiving the control member.

6. A bicycle control device according to any one of claims 2 to 5, wherein the operating member (41) and the control member (40) are arranged to be pivotable about a common axis along the shift operating path, in particular an operational axis of the shift control unit.

7. A bicycle control device according to any one of claims 2 to 5, wherein the operating member (41) and the control member (40) are arranged to be pivotable about parallel and/or offset axes along the shift operating path.

8. A bicycle control device according to any one of claims 2 to 7, wherein the operating member (41) and the control member (40) are arranged to be pivotable about parallel and/or offset axes along said brake operating path.

## Patentansprüche

1. Fahrradsteuervorrichtung (12), umfassend:
ein Basiselement (36);
eine Schaltsteuereinheit (SU), beweglich in einer ersten Richtung und einer zweiten Richtung;
ein Bedienelement (41), operativ gekoppelt an die Schaltsteuereinheit, wobei das Bedienelement (41) beweglich gekoppelt ist relativ zu dem Basiselement (36) um sich entlang eines Schaltbedienpfades (SP) zu bewegen, ausgehend von einer Ruheposition (RP) zu einer ersten Schaltposition, um eine Bewegung der Schaltsteuereinheit in der ersten Richtung zu veranlassen,
Wobei das Bedienelement (41) ferner beweglich gekoppelt ist bezüglich dem Basiselement zur Bewegung entlang eines Bremsbedienpfades (BP), zum Durchführen eines Bremsvorganges, wobei der Bremsbedienpfad nicht-übereinstimmend ist mit dem Schaltbedienpfad und wobei das Bedienelement (41) einen Fingerberührabschnitt (41b) aufweist, konfiguriert und angeordnet zum Bedienen des Bedienelementes entlang dem Bremsbedienpfad,
**dadurch gekennzeichnet, dass** das Bedienelement (41) beweglich gekoppelt ist bezüglich dem Basiselement (36) zur Bewegung entlang dem Schaltbedienpfad von der Ruheposition zu einer zweiten Schaltposition zum Veranlassen einer Bewegung der Schaltsteuereinheit in der zweiten Richtung, wobei die erste Schaltposition befindlich ist zwischen der Ruheposition und der zweiten Schaltposition.

2. Fahrradsteuervorrichtung gemäß Anspruch 1, ferner umfassend ein Steuerelement (40), enthaltend einen ersten Abschnitt (71), operativ gekoppelt an die Schaltsteuereinheit (SU) und einen zweiten Abschnitt (72), in Eingriff mit dem Bedienelement (41), insbesondere ist der zweite Abschnitt (72) des Steuerelementes vorgespannt hin zu dem Bedienelement.

3. Fahrradsteuervorrichtung gemäß einem der vorangegangenen Ansprüche, bei welcher das Bedienelement (41) einen Montagepart (41 a) enthält, schwenkbar gekoppelt an das Basiselement, sowie einen Bedienpart (41 b), schwenkbar gekoppelt an den Montagepart.

4. Fahrradsteuervorrichtung gemäß einem der Ansprüche 2 und 3, bei welchem das Bedienelement (41) einen konkaven Abschnitt gegenüberliegend dem Fingerberührabschnitt aufweist.

5. Fahrradsteuervorrichtung gemäß Anspruch 4, bei welchem der konkave Abschnitt konfiguriert ist zum gleitfähigen Aufnehmen des Steuerelementes.

6. Fahrradsteuervorrichtung gemäß einem der Ansprüche 2 bis 5, bei welchem das Bedienelement (41) und das Steuerelement (40) angeordnet sind um schwenkbar zu sein bezüglich einer gemeinsamen Achse entlang des Schaltbedienpfades, insbesondere um eine operative Achse oder Wirkachse der Schaltsteuereinheit.

7. Fahrradsteuervorrichtung gemäß einem der Ansprüche 2 bis 5, bei welchem das Bedienelement (41) und das Steuerelement (40) angeordnet sind um schwenkbar zu sein bezüglich paralleler und/oder versetzter Achsen entlang des Schaltbedienpfades.

8. Fahrradsteuervorrichtung gemäß einem der Ansprüche 2 bis 7, bei welchem das Bedienelement (41) und das Steuerelement (40) angeordnet sind um schwenkbar zu sein bezüglich paralleler und/oder versetzter Achsen entlang dem Bremsbedien- oder Betätigungspfad.

## Revendications

1. Dispositif de commande de bicyclette (12) comprenant :
un élément de base (36) ;
une unité de commande de changement de vitesse (SU), mobile dans une première direction et dans une deuxième direction ;
un élément d'actionnement (41), couplé fonctionnellement à l'unité de commande de changement de vitesse, l'élément d'actionnement (41) étant couplé mobile par rapport à l'élément de base (36), pour se déplacer le long d'un chemin d'actionnement de changement de vitesse (SP) depuis une position de repos (RP) vers une première position de changement de vitesse, pour amener un mouvement de l'unité de commande de changement de vitesse dans la première direction,
l'élément d'actionnement (41) étant en outre couplé mobile par rapport à l'élément de base pour se déplacer le long d'un chemin d'actionnement de freinage (BP), pour réaliser une opération de freinage, le chemin d'actionnent de freinage étant non-coïncident avec le chemin d'actionnement de changement de vitesse, et l'élément d'actionnement (41) ayant une partie de contact pour doigt (41 b) configurée et agencée pour actionner l'élément d'actionnement le long du chemin d'actionnement de freinage,
**caractérisé en ce que**
l'élément d'actionnement (41) est couplé mobile par rapport à l'élément de base (36), pour se déplacer le long du chemin d'actionnement de changement de vitesse, depuis la position de repos vers une deuxième position de changement de vitesse, pour amener un mouvement de l'unité de commande de changement de vitesse dans la deuxième direction, la première position de changement de vitesse étant située entre la position de repos et la deuxième position de changement de vitesse.

2. Dispositif de commande de changement de vitesse selon la revendication 1, comprenant en outre un élément de commande (40) comprenant une première partie (71) couplée fonctionnellement à l'unité de commande de changement de vitesse (SU) et une deuxième partie (72) engagée avec l'élément d'actionnement (41), en particulier la deuxième partie (72) de l'élément de commande étant sollicitée vers l'élément d'actionnement.

3. Dispositif de commande de bicyclette selon l'une quelconque des revendications précédentes, dans lequel l'élément d'actionnement (41) comprend une partie de montage (41a) couplée pivotante à l'élément de base, et une partie d'actionnement (41b) couplée pivotante à la partie de montage.

4. Dispositif de commande de bicyclette selon l'une quelconque des revendications 2 à 3, dans lequel l'élément d'actionnement (41) a une partie concave opposée à la partie de contact pour doigt.

5. Dispositif de commande de bicyclette selon la revendication 4, dans lequel la partie concave est configurée pour recevoir, de manière coulissante, l'élément de commande.

6. Dispositif de commande de bicyclette selon l'une quelconque des revendications 2 à 5, dans lequel l'élément d'actionnement (41) et l'élément de commande (40) sont agencés pour pouvoir pivoter par rapport à un axe commun le long du chemin d'actionnement de changement de vitesse, en particulier un axe opérationnel de l'unité de commande de changement de vitesse.

7. Dispositif de commande de bicyclette selon l'une quelconque des revendications 2 à 5, dans lequel l'élément d'actionnement (41) et l'élément de commande (40) sont agencés pour pouvoir pivoter par rapport à des axes parallèles et/ou décalés le long du chemin d'actionnement de changement de vitesse.

8. Dispositif de commande de bicyclette selon l'une quelconque des revendications 2 à 7, dans lequel l'élément d'actionnement (41) et l'élément de commande (40) sont agencés pour pouvoir pivoter par rapport à des axes parallèles et/ou décalés le long du chemin d'actionnement de freinage.
